# EUROPÄISCHE PATENTSCHRIFT

(11) **EP 3 442 086 B1**
(45) Veröffentlichungstag und Bekanntmachung des Hinweises auf die Patenterteilung: **19.02.2020**
(21) Anmeldenummer: 18188238.2
(22) Anmeldetag: 09.08.2018
(51) Int. Cl.: H02G 3/08, H02G 3/22, H02G 3/12, H02G 3/06, H02G 3/04

(54) **ROHRSTUTZEN EINES ELEKTROINSTALLATIONSGEHÄUSES**
PIPE SOCKET OF AN ELECTRICAL INSTALLATION HOUSING
MANCHON DE TUBE POUR BOÎTIER D'INSTALLATION ÉLECTRIQUE

(30) Priorität: 11.08.2017 DE 102017118406
(43) Veröffentlichungstag der Anmeldung: 13.02.2019
(73) Patentinhaber: Günther Spelsberg GmbH & Co. KG, 58579 Schalksmühle (DE)
(72) Erfinder: Zborowski, Zbigniew, 58579 Schalksmühle (DE); Edelhoff, Detlev, 58579 Schalksmühle (DE)
(74) Vertreter: Michalski Hüttermann & Partner Patentanwälte mbB

(56) Entgegenhaltungen:
- EP-A1- 0 546 637
- EP-A1- 1 737 094
- CH-B1- 701 382
- DE-A1-102013 109 653

## Beschreibung

Die Erfindung betrifft einen Rohrstutzen eines Elektroinstallationsgehäuses, zur Aufnahme eines Endes eines Rohres, mit einem Rohraufnahmeabschnitt, der auf seiner zur Einführung des Rohres vorgesehenen Seite offen und auf seiner anderen Seite mit einer Wandung verschlossen ist, wobei die Wandung eine Sollbruchstelle aufweist, so dass ein Bereich der Wandung herausbrechbar ist. Die Erfindung betrifft außerdem einen Satz mit einem Rohrstutzen eines Elektroinstallationsgehäuses und einem mit einem seiner Enden in den Rohrstutzen einführbaren Rohr, wobei der Rohrstutzen einen Rohraufhahmeabschnitt aufweist, der auf seiner zur Einführung des Rohres vorgesehenen Seite offen und auf seiner anderen Seite mit einer Wandung verschlossen ist, wobei die Wandung eine Sollbruchstelle aufweist, so dass ein Bereich der Wandung herausbrechbar ist.

Elektroinstallationsgehäuse sind aus der Praxis gut bekannt. Derartige Elektroinstallationsgehäuse werden in den unterschiedlichsten Anwendungsgebieten zum Anschluss und/oder zur Verbindung von elektrischen Leitern miteinander oder mit anderen elektrischen Einrichtungen verwendet. Insbesondere sind derartige Elektroinstallationsgehäuse auch in Form von Unterputzdosen und Betoninstallationssystemen bekannt, denen gemeinsam ist, dass sie im installierten Zustand in Wänden, Böden und/oder Decken eines Gebäudes angeordnet sind. Insbesondere in derartigen Fällen ist es üblich, den Elektroinstallationsgehäusen Kabel mit Hilfe von Rohren zuzuleiten, in denen die Kabel geführt sind. Derartige Rohre werden häufig von Rohrstutzen aufgenommen, die am Elektroinstallationsgehäuse als integraler oder separater, also abnehmbarer Bestandteil vorgesehen sind.

Mitunter werden Elektroinstallationsgehäuse mit einer Mehrzahl von Rohrstutzen zum Aufnehmen von Rohren versehen. Falls nicht alle diese Rohrstutzen zum Zuführen von Kabeln mit Hilfe von entsprechenden Rohren verwendet werden, kann es wichtig sein, dass das Elektroinstallationsgehäuse im Bereich der Rohrstutzen, in denen kein Rohr eingeführt ist, verschlossen ist. Daher ist es allgemein üblich, Elektroinstallationsgehäuse bereitzustellen, die mit derartigen Rohrstutzen versehen sind, deren Öffnung mit einer herausbrechbaren Wandung versehen ist.

In diesem Zusammenhang ist aus der EP 1 737 094 A1 eine Muffe zum auszugssicheren Einführen eines gewellten Rohres, beispielsweise in Form einer Unterputzdose bekannt, die eine hohlzylindrische Wandung aufweist, die ihrerseits an ihrer Innenseite radial nach innen vorspringende Haltemittel aufweist. An einem inneren Ende einer Öffnung in der hohlzylindrischen Wandung ist eine Membran vorgesehen, an welcher ihrerseits ein Schlagkreuz angebracht ist. Am Umfang der Membran verläuft eine Sollbruchstelle, entlang der die Membran mittels des Schlagkreuzes ausgeschlagen werden kann.

Die EP 2 360 800 A2 beschreibt ein Installationsteil, insbesondere für die elektrische Installation, zum Einführen oder Durchführen eines Leerrohres, wobei das Installationsteil eine Wandung mit einem durch eine Sollbruchstelle umgrenzten Wandungsbereich aufweist, der durch Heraustrennen des Wandungsbereichs einen Einlass oder Durchlass für ein Leerrohr bildet. Dabei weist der Wandungsbereich eine Eingriffskontur für ein Werkzeug, insbesondere die Klinge eines Schraubendrehers, zum Ausbrechen des Wandungsbereichs auf. Der Wandungsbereich ist dabei mit einer Versteifung versehen, mittels derer die Wirkkraft des Werkzeugs in der Eingriffslage auf einen großen Flächenbereich des Wandungsbereichs erstreckt wird.

Schließlich ist aus der EP 3 026 766 A1 eine Rohreinführung für eine Unterputzdose bekannt, die eine Öffnung zum Wirkverbinden eines Kabelschutzschlauchs mit der Unterputzdose aufweist. Die Öffnung wird dabei mittels eines Verschlusselements verschlossen. Das Verschlusselement umfasst in einer Ausführungsform eine Aufnahme für einen Schraubenzieher, wobei die Aufnahme durch seitlich angeordnete Streben abgestützt wird, die als Schlagkreuz dienen. Damit kann das Verschlusselement sowohl ausgebrochen als auch durchschlagen werden.

Die CH 701 382 B1 beschreibt eine Installationsdose, welche einen Installationsraum für Schleifen eines elektrischen oder optischen Leiters sowie einen zugänglichen Installationsraum hat. Die Netzwerke sind in Form eines Hohlteils ausgebildet, in das Kabelkanäle versenkbar oder einführbar sind. Die montagefertige Installationsdose ist zweiteilig ausgeführt.

Die in EP 1 737 094 A1 beschriebene Hülse weist eine hohlzylindrische Wand auf, die an einer Innenseite ein radial nach innen ragendes Halteteil aufweist. Ein nach innen ragendes Halteteil ist an der Innenseite der Wand für ein Wellrohr mit einem kleineren Außendurchmesser angeordnet. Eine Schulter ist als Tiefenanschlag für das Wellrohr mit größerem Außendurchmesser zwischen den Halteteilen angeordnet.

EP 0 546 637 A1 beschreibt eine Kombination aus einem elektrischen Verbindungskasten mit Kastenrohrstutzen, die mit einem Innengewinde versehen sind und durch eine Ausbrechwand verschlossen sind und einer Überwurfmutter, die in einen Kastenrohrstutzen einschraubbar ist. Ein Ausbrechbolzen zum Lösen der Ausbrechwand ist zwischen der der Überwurfmutter zugewandten Seite der Ausbrechwand und der der Ausbrechwand zugewandten Seite eines Endes angeordnet eine Überwurfmutter, die in den Kastenrohrstutzen einschraubbar ist. Der Ausbrechbolzen kann an der Ausbrechwand, am Ende der Überwurfmutter oder an einem separaten Element, beispielsweise einem Ring, angebracht werden.

Die DE 10 2013 109653 A1 betrifft ein Steckverbindergehäuse zum Schutz eines Steckverbinders, umfassend wenigstens einen voreingerichteten Kabelabgang zum Anschließen einer Kabelverschraubung und wenigstens einen Verschluss zum Verschließen des wenigstens einen Kabelabgangs. Dabei weist der wenigstens ein Kabelabgang ein Gewinde auf, durch welches ein Schraubkanal gebildet wird und das Steckverbindergehäuse weist im Übergang zum Verschluss eine Sollbruchstelle auf. Zudem betrifft die Erfindung ein Verfahren zum Öffnen eines Kabelabgangs eines Steckverbindergehäuses.

Diesen aus dem Stand der Technik bekannten Lösungen ist gemein, dass zum Herausbrechen der in dem Rohrstutzen vorgesehenen Wandung, die das Elektroinstallationsgehäuse verschließt, ein separates Werkzeug erforderlich ist.

Daher ist es die Aufgabe der Erfindung, einen derartigen Rohrstutzen für ein Elektroinstallationsgehäuse anzugeben, dessen eine Öffnung in dem Rohrstutzen verschließende Wandung auf einfache und sichere Weise werkzeuglos entfernbar ist.

Diese Aufgabe wird durch die Gegenstände der unabhängigen Patentansprüche gelöst. Bevorzugte Weiterbildungen der Erfindung sind in den Unteransprüchen beschrieben.

Erfindungsgemäß ist somit ein Rohrstutzen eines Elektroinstallationsgehäuses, zur Aufnahme eines Endes eines Rohres vorgesehen, mit einem Rohraufnahmeabschnitt, der auf seiner zur Einführung des Rohres vorgesehenen Seite offen und auf seiner anderen Seite mit einer Wandung verschlossen ist, wobei die Wandung eine Sollbruchstelle aufweist, so dass ein Bereich der Wandung herausbrechbar ist, und auf dem herausbrechbaren Bereich ein Rohrkontaktelement befestigt ist, das derart ausgestaltet ist, dass das Rohrkontaktelement von der Wandung in das Innere des Rohraufnahmeabschnitts hineinreicht und eine der Innenwand des Rohraufnahmeabschnitts zugewandte Rohrkontaktfläche aufweist, dadurch gekennzeichnet, dass die Rohrkontaktfläche mit zunehmendem Abstand von der Wandung weiter von der Innenwand des Rohraufnahmeabschnitts entfernt ist, so dass es beim Einführen eines Rohres in den Rohraufnahmeabschnitt zur Übertragung eines Momentes auf den herausbrechbaren Bereich der Wandung kommt, so dass mit fortschreitendem Einführen des Rohres in den Rohraufnahmeabschnitt und damit beim Aufschieben des Rohres auf das Rohrkontaktelement das Rohrkontaktelement immer stärker werdende seitliche Kräfte erfährt und der herausbrechbare Bereich der Wandung herausgebrochen und schließlich aus dem Rohrstutzen ausgeworfen wird.

Maßgeblich für die Erfindung ist also, dass auf dem herausbrechbaren Bereich ein Rohrkontaktelement befestigt ist. Dieses Rohrkontaktelement ist derart ausgestaltet, dass es beim Einführen eines Rohres in den Rohraufhahmeabschnitt des Rohrstutzens zur Übertragung eines Momentes auf den herausbrechbaren Bereich der Wandung kommt, so dass mit fortschreitendem Einführen des Rohres in den Rohrstutzen der herausbrechbare Bereich der Wandung herausgebrochen und schließlich aus dem Rohrstutzen ausgeworfen wird. Ermöglicht wird dieses werkzeuglose Herausbrechen eines Teils der Wandung dadurch, dass die Rohrkontaktfläche des Rohrkontaktelements einen solchen Winkel relativ zur Innenwand des Rohraufhahmeabschnitts aufweist, der bewirkt, dass beim Einschieben des Rohres in den Rohraufnahmeabschnitt und damit beim Aufschieben des Rohres auf das Rohrkontaktelement das Rohrkontaktelement immer stärker werdende seitliche Kräfte erfährt, die letztlich zu dem Moment auf den herausbrechbaren Bereich der Wandung führen, die den Bruch der Sollbruchstelle zur Konsequenz haben. Ein weiterer Vorteil der Erfindung besteht darin, dass das Herausbrechen des herausbrechbaren Bereichs der Wandung nicht vergessen werden kann. Schließlich führt ein Einführen eines Rohres in den Rohraufnahmeabschnitt immer dazu, dass der herausbrechbare Bereich der Wandung herausgebrochen wird.

Es sei betont, dass der erfindungsgemäße Rohrstutzen integraler Bestandteil eines Elektroinstallationsgehäuses sein kann, mit dessen Gehäuse also einstückig ausgebildet sein kann. Alternativ dazu meint die Erfindung jedoch auch derartige Rohrstutzen, die als separates Bauteil ausgebildet sind, an ein Elektroinstallationsgehäuse also als modulares Bauteil angebracht werden können.

Grundsätzlich kann der Winkel, den die Innenwand mit der Rohrkontaktfläche einschließt, unterschiedlich dimensioniert werden, um den Rohrstutzen an verschiedene Rohrdimensionierungen anzupassen. Ein derartiger Winkel kann daher vom Fachmann bedarfsweise ermittelt werden. Vorzugsweise ist jedoch vorgesehen, dass die Rohrkontaktfläche mit der Innenwand des Rohraufhahmeabschnitts einen Winkel α von 30° oder weniger einschließt. Bei einem Winkel von 30° kann der erfindungsgemäße Effekt der Übertragung eines Moments auf den herausbrechbaren Bereich in den meisten Fällen bereits effektiv erzielt werden. Es gibt jedoch auch Fälle, in denen ein größerer Winkel als 30° möglich ist. Ganz besonders bevorzugt ist ein noch kleinerer Winkel von 20° oder weniger oder von 15° oder weniger vorgesehen.

Grundsätzlich kann die Rohrkontaktfläche entlang ihrer gesamten Länge immer den selben Winkel gegenüber der Innenwand aufweisen. Alternativ umfasst die Erfindung jedoch auch solche Ausgestaltungen, gemäß derer die Rohrkontaktfläche abschnittweise in verschiedenen Winkeln gegenüber der Innenwand verläuft. Die Erfindung umfasst auch solche Ausgestaltungen, gemäß derer die Rohrkontaktfläche wenigstens abschnittweise gekrümmt verläuft.

Maßgeblich ist auch, dass nicht die gesamte der Innenwand des Rohraufnahmeabschnitts zugewandte Fläche des Rohrkontaktelements den beschriebenen Winkel relativ zur Innenwand des Rohraufnahmeabschnitts aufweisen muss. Wesentlich ist lediglich, dass das Rohrkontaktelement wenigstens abschnittsweise eine derartige Rohrkontaktfläche aufweist. In Bereichen außerhalb der Rohrkontaktfläche, insbesondere davor und/oder dahinter, kann die der Innenwand des Rohraufnahmeabschnitts zugewandte Fläche des Rohraufnahmeabschnitts auch in einem anderen Winkel relativ zur Innenwand des Rohraufnahmeabschnitts verlaufen.

In diesem Zusammenhang ist gemäß einer bevorzugten Weiterbildung der Erfindung insbesondere vorgesehen, dass die Rohrkontaktfläche im Endbereich des Rohrkontaktelements, bevor das Rohrkontaktelement an der herausbrechbaren Wandung befestigt ist, mit der Innenwand des Rohraufnahmeabschnitts einen Winkel einschließt, der größer als der Winkel ist, den die Rohrkontaktfläche mit der Innenwand einschließt. Auf diese Weise kann am Ende des Rohrkontaktelements ein Bereich verwirklicht werden, der beim Einschieben eines Rohres in den Rohraufnahmeabschnitt des Rohrstutzens weniger dazu beiträgt, dass auf den herausbrechbaren Bereich der Wandung ein Moment ausgeübt wird, das zum Brechen der Sollbruchstelle führt. Vielmehr bewirkt dieser in einem größeren Winkel relativ zur Innenwand des Rohraufnahmeabschnitts verlaufende Bereich, dass das Rohrkontaktelement zusammen mit dem herausgebrochenen Bereich der Wandung auf der Seite des Rohrstutzens ausgeworfen wird, der der Seite der Einführung des Rohres in den Rohrstutzen gegenüberliegt. Im Übrigen ist gemäß einer bevorzugten Weiterbildung der Erfindung vorgesehen, dass dieser Endbereich des Rohrkontaktelements, bevor das Rohrkontaktelement an der herausbrechbaren Wandung befestigt ist, in Längsrichtung des Rohrstutzens gesehen eine Länge von wenigstens 1 mm und eine maximale Länge von 20 mm aufweist.

Grundsätzlich ist es vorteilhaft, wenn die Sollbruchstelle um das Rohrkontaktelement herum verläuft. In diesem Zusammenhang ist insbesondere bevorzugt, dass der der Rohrkontaktfläche abgewandte Bereich der Sollbruchstelle wenigstens abschnittsweise, vorzugsweise vollständig, längs einer Geraden verläuft. Dies ist insofern vorteilhaft, als dass eine derartige gerade verlaufende Sollbruchstelle in diesem Bereich ein zum Herausbrechen besonders geeignetes Verschwenken des herausbrechbaren Bereichs der Wandung aufgrund des durch das Rohr auf das Rohrkontaktelement übertragenen Moments unterstützt.

Grundsätzlich kann es ausreichend sein, wenn der erfindungsgemäße Rohrstutzen ein einziges Rohrkontaktelement aufweist. Gemäß einer bevorzugten Weiterbildung ist jedoch ein zweites, auf einem herausbrechbaren Bereich befestigtes Rohrkontaktelement vorgesehen, das von der Wandung in das Innere des Rohraufnahmeabschnitts hineinreicht und eine der Innenwand des Rohraufnahmeabschnitts zugewandte Rohrkontaktfläche aufweist, die mit zunehmendem Abstand von der Wandung weiter von der Innenwand des Rohraufnahmeabschnitts entfernt ist und mit der Innenwand des Rohraufnahmeabschnitts einen Winkel α von maximal 30° einschließt. Mit anderen Worten: Vorzugsweise ist ein zweites Rohrkontaktelement vorgesehen, das ebenfalls auf einem herausbrechbaren Bereich befestigt ist und grundsätzlich so ausgestaltet ist, wie das erste Rohrkontaktelement. Dabei gilt jedoch, dass die beiden Rohrkontaktelemente von ihrer Anordnung und auch von ihrer Form her nicht identisch ausgebildet sein müssen, solange sie der hier angegebenen Definition genügen.

Grundsätzlich ist es möglich, dass das zweite Rohrkontaktelement auf demselben herausbrechbaren Bereich der Wandung angeordnet ist. Gemäß einer bevorzugten Weiterbildung der Erfindung ist das zweite Rohrkontaktelement jedoch auf einem separaten herausbrechbaren Bereich angeordnet. In diesem Zusammenhang ist es insbesondere bevorzugt, dass der separate herausbrechbare Bereich direkt an den anderen herausbrechbaren Bereich angrenzt. In diesem Fall ist es ganz besonders bevorzugt, dass die Grenze, an der die beiden herausbrechbaren Bereiche aneinandergrenzen, längs einer Geraden verläuft. Dies hat wieder den weiter oben schon beschriebenen Vorteil, dass auf diese Weise ein Verschwenken der herausbrechbaren Bereiche der Wandung aufgrund der auf die herausbrechbaren Bereiche der Wandung übertragenen Momente unterstützt wird.

Auch wenn es, wie weiter oben, beschrieben ist, möglich ist, dass die beiden Rohrkontaktelemente nicht in gleicher Weise ausgestattet und angeordnet sind, so ist es gemäß einer bevorzugten Weiterbildung der Erfindung gleichwohl vorgesehen, dass die beiden Rohrkontaktelemente relativ zu der Längsachse des Rohrstutzens achssymmetrisch ausgestaltet und angeordnet sind. Dies hat den Vorteil, dass durch das Einschieben des Rohres in den Rohrstutzen nur Kräfte auf die Rohrkontaktelemente und die herausbrechbaren Bereiche der Wandung ausgeübt werden und nicht auf andere Teile des Rohrstutzens und des Elektroinstallationsgehäuses, sofern der Rohrstutzen bereits an dem Elektroinstallationsgehäuse angeordnet ist.

Die weiter oben angegebene Aufgabe wird auch gelöst durch einen Satz mit einem Rohrstutzen eines Elektroinstallationsgehäuses und einem mit einem seiner Enden in den Rohrstutzen einführbaren Rohr, wobei der Rohrstutzen einen Rohraufnahmeabschnitt aufweist, der auf seiner zur Einführung des Rohres vorgesehenen Seite offen und auf seiner anderen Seite mit einer Wandung verschlossen ist, wobei die Wandung eine Sollbruchstelle aufweist, so dass ein Bereich der Wandung herausbrechbar ist, dadurch gekennzeichnet, dass auf dem herausbrechbaren Bereich ein Rohrkontaktelement befestigt ist, das von der Wandung in das Innere des Rohraufnahmeabschnitts hineinreicht und eine der Innenwand des Rohraufnahmeabschnitts zugewandte Rohrkontaktfläche aufweist, die mit zunehmendem Abstand von der Wandung weiter von der Innenwand des Rohraufnahmeabschnitts entfernt ist, wobei die Sollbruchstelle und die Rohrkontaktfläche derart dimensioniert sind, dass beim Einführen des Rohres in den Rohraufhahmeabschnitt des Rohrstutzens derart, dass das Ende des Rohres in einem vorbestimmten Abstand vor der Wandung steht, von der Innenwand des Rohres ein derartiges Moment auf die Rohrkontaktfläche ausgeübt wird, dass der herausbrechbare Bereich der Wandung herausgebrochen wird.

Der erfindungsgemäße Satz mit einem Rohrstutzen und einem mit einem seiner Enden in den Rohrstutzen einführbaren Rohr ist also derart angelegt, dass der herausbrechbare Bereich der Wandung spätestens dann herausgebrochen wird, wenn das Rohr so tief in den Rohrstutzen eingeführt worden ist, dass das Ende des Rohres in dem vorbestimmten Abstand vor der Wandung steht. Dadurch, dass die Rohrkontaktfläche derart ausgestaltet ist, dass sie mit zunehmendem Abstand von der Wandung weiter von der Innenwand des Rohraufnahmeabschnitts entfernt ist, vergrößert sich das Moment, das beim Einführen des Rohres in den Rohrstutzen eingeführt wird immer weiter, je weiter das Rohr in den Stutzen eingeführt wird. Spätestens wenn das Ende des Rohres den vorbestimmten Abstand vor der Wandung erreicht hat, kommt es zum Herausbrechen des herausbrechbaren Bereichs der Wandung und beim weiteren Einführen des Rohres dann zum Ausstoßen des herausbrechbaren Bereichs der Wandung nach hinten. Vorzugsweise ist der vorbestimmte Abstand im Übrigen größer als Null, weiter bevorzugt größer als 1 mm und ganz besonders bevorzugt größer als 3 mm.

Für diesen Satz mit einem Rohrstutzen eines Elektroinstallationsgehäuses und einem mit einem seiner Enden in den Rohrstutzen einführbaren Rohr gilt gemäß einer bevorzugten Weiterbildung der Erfindung, dass der Endbereich des Rohrkontaktelements, bevor das Rohrkontaktelement an der herausbrechbaren Wandung befestigt ist, in Längsrichtung des Rohrstutzens gesehen eine Länge von wenigstens 1 mm und eine maximale Länge von 20 mm aufweist. Dies hat den oben schon angesprochenen Vorteil, dass das Rohrkontaktelement zusammen mit dem herausgebrochenen Bereich der Wandung auf der Seite des Rohrstutzens einfach ausgeworfen werden kann, der der Seite der Einführung des Rohres in den Rohrstutzen gegenüberliegt.

Außerdem ist vorzugsweise ein zweites, auf einem herausbrechbaren Bereich der Wandung befestigtes Rohrkontaktelement vorgesehen, das von der Wandung in das Innere des Rohraufnahmeabschnitts hineinreicht und eine der Innenwand des Rohraufhahmeabschnitts zugewandte Rohrkontaktfläche aufweist, die mit zunehmendem Abstand von der Wandung weiter von der Innenwand des Rohraufhahmeabschnitts entfernt ist wobei die Sollbruchstelle und die Rohrkontaktfläche derart dimensioniert sind, dass beim Einführen des Rohres in den Rohraufnahmeabschnitt des Rohrstutzens derart, dass das Ende des Rohres in einem vorbestimmten Abstand vor der Wandung steht, von der Innenwand des Rohres ein derartiges Moment auf die Rohrkontaktfläche ausgeübt wird, dass der herausbrechbare Bereich der Wandung herausgebrochen wird, wobei der Abstand der Rohrkontaktflächen der beiden Rohrkontaktelemente im Endbereich des Rohrkontaktelements, bevor das Rohrkontaktelement an dem herausbrechbaren Bereich der Wandung befestigt ist, größer als der Innendurchmesser des Rohres ist.

Im Übrigen ergeben sich bevorzugte Weiterbildungen des Satzes mit einem Rohrstutzen eines Elektroinstallationsgehäuses und einem mit einem seiner Enden in den Rohrstutzen einführbaren Rohr in Analogie zu den weiter oben beschriebenen bevorzugten Weiterbildungen des Rohrstutzens.

Nachfolgend wird die Erfindung anhand eines bevorzugten Ausführungsbeispiels unter Bezugnahme auf die Zeichnungen weiter im Detail erläutert. In den Zeichnungen zeigen
- Fig. 1: einen Rohrstutzen gemäß einem bevorzugten Ausführungsbeispiel der Erfindung in perspektivischer Ansicht,
- Fig. 2: den Rohrstutzen gemäß dem bevorzugten Ausführungsbeispiel der Erfindung in perspektivischer Ansicht, teilweise im Schnitt,
- Fig. 3: den Rohrstutzen gemäß dem bevorzugten Ausführungsbeispiel der Erfindung in einer perspektivischen Ansicht von hinten zusammen mit einem darin einzuführenden Rohr,
- Fig. 4a und 4b: die Einführung eines Rohres in den Rohrstutzen gemäß dem bevorzugten Ausführungsbeispiel der Erfindung in einer perspektivischen Ansicht sowie in einer Schnittdarstellung,
- Fig. 5a und 5b: das Auswerfen des herausbrechbaren Wandungsteils zusammen mit den Rohrkontaktelementen bei dem Rohrstutzen gemäß dem bevorzugten Ausführungsbeispiel der Erfindung in einer perspektivischen Ansicht sowie in einer Schnittdarstellung,
- Fig. 6: eine vergrößerte Schnittdarstellung des Rohrstutzens gemäß dem bevorzugten Ausführungsbeispiel der Erfindung, und
- Fig. 7: eine vergrößerte perspektivische Ansicht der Rohrkontaktelemente des Rohrstutzens gemäß dem bevorzugten Ausführungsbeispiel der Erfindung.

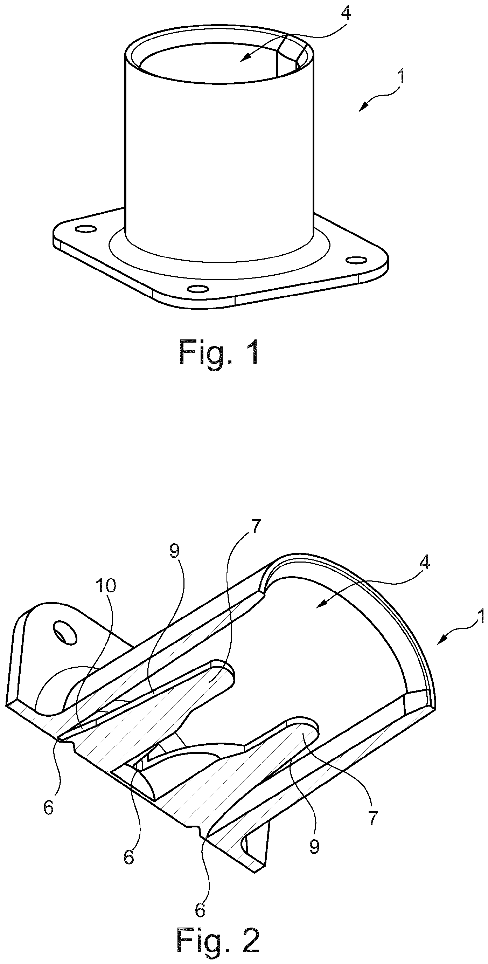

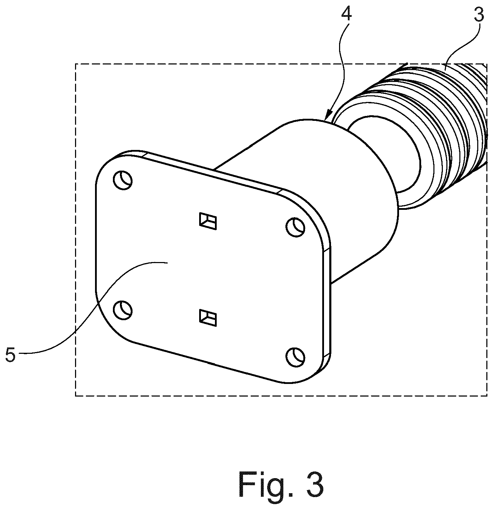

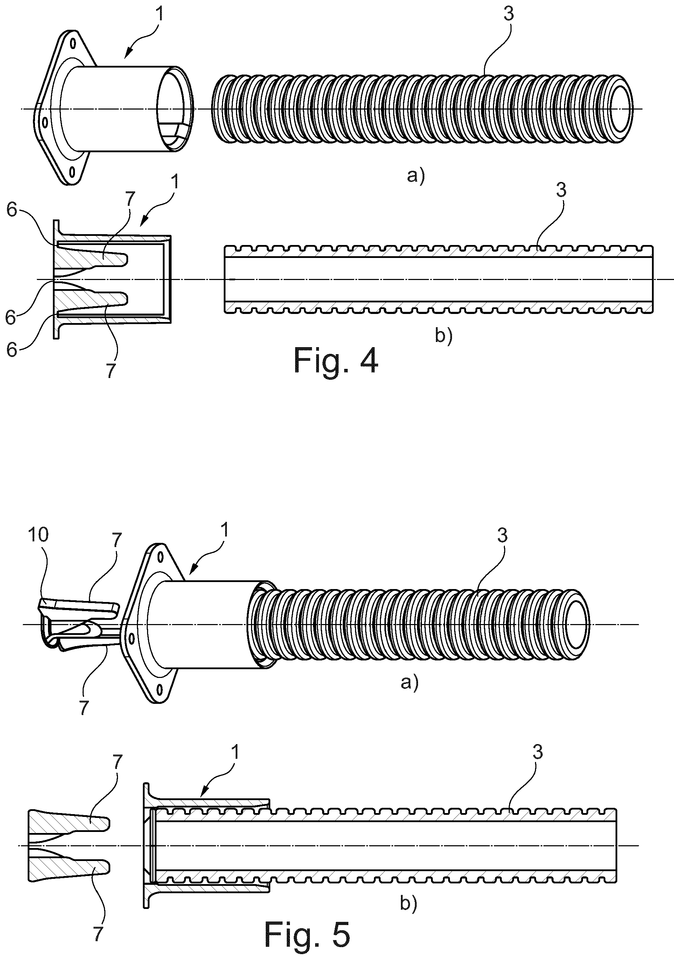

Wie insbesondere aus den Fig. 1 und 2 ersichtlich, ist der Rohrstutzen 1 gemäß dem vorliegend beschriebenen bevorzugten Ausführungsbeispiel der Erfindung ein separates Bauteil, kann also modular an ein nicht weiter dargestelltes Elektroinstallationsgehäuse angebracht werden. Zur Aufnahme eines Endes eines in den Fig. 3, 4 und 5 dargestellten Rohres 3 weist der Rohrstutzen 1 einen Rohraufnahmeabschnitt 4 auf. Dieser ist auf seiner zur Einführung des Rohres 3 vorgesehenen Seite offen und auf seiner anderen Seite, wie insbesondere aus Fig. 3 ersichtlich, mit einer Wandung 5 verschlossen.

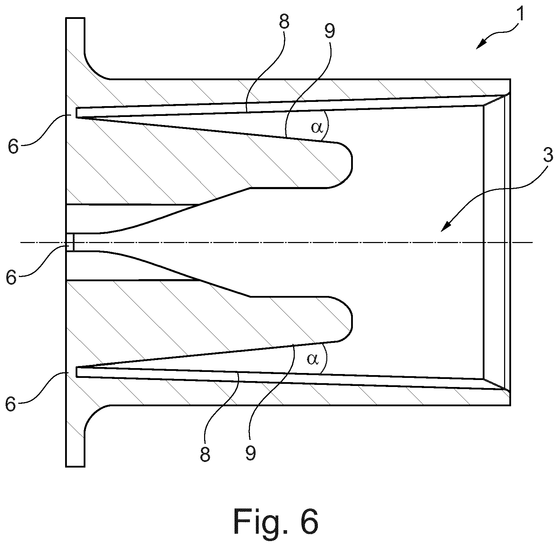

Die Wandung 5 weist Sollbruchstellen 6 auf. Diese Sollbruchstellen 6 verlaufen um Rohrkontaktelemente 7 herum, die an einem von den Sollbruchstellen 6 umrandeten Bereich der Wandung 5 befestigt sind. Im Übrigen ragen die Rohrkontaktelemente 7 in das Innere des Rohraufnahmeabschnitts 4 des Rohrstutzens 1 hinein. Die Rohrkontaktelemente 7 weisen eine der Innenwand 8 des Rohraufnahmeabschnitts 4 zugewandte Rohrkontaktfläche 9 auf, die mit zunehmendem Abstand von der Wandung 5 weiter von der Innenwand 8 des Rohraufnahmeabschnitts 4 entfernt ist. Wie in diesem Zusammenhang insbesondere Fig. 6 entnehmbar, schließt die Rohrkontaktfläche 9 mit der Innenwand 8 des Rohraufnahmeabschnitts 4 einen Winkel α ein, der vorliegende etwa 8° beträgt.

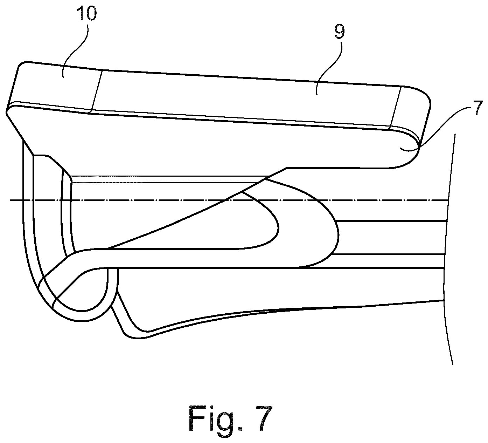

Für die Rohrkontaktfläche 9 gilt weiterhin, dass diese im Endbereich 10 des Rohrkontaktelements 7, bevor das Rohrkontaktelement 7 an der herausbrechbaren Wandung befestigt ist, mit der Innenwand 8 des Rohraufnahmeabschnitts 4 einen Winkel β einschließt, der größer als der Winkel α ist. Dies ist insbesondere Fig. 7 entnehmbar, die zeigt, dass die Rohrkontaktfläche 9 im Endbereich 10 des Rohrkontaktelements 4 nach oben abgewinkelt ist. Auf diese Weise setzt das Rohrkontaktelement 7 beim Einschieben des Rohres 3 in den Rohraufhahmeabschnitt 4 des Rohrstutzens 1 dem Rohr 3 einen Widerstand entgegen, mit dem, nach Herausbrechen des herausbrechbaren Bereichs der Wandung 5, diese zusammen mit dem Rohrkontaktelement 7 aus dem Rohrstutzen 1 ausgeworfen werden kann.

Fig. 2 ist entnehmbar, dass die Sollbruchstelle 6 zwischen den beiden Rohrkontaktelementen 7 längs einer Geraden verläuft. Dies hat den oben schon angesprochenen Vorteil, dass eine derartige gerade verlaufende Sollbruchstelle 6 in diesem Bereich ein zum Herausbrechen besonders geeignetes Verschwenken des herausbrechbaren Bereichs der Wandung 5 aufgrund des durch das Rohr 3 auf das Rohrkontaktelement 7 übertragenen Moments unterstützt.

**Bezugszeichenliste**

| | |
|---|---|
| Rohrstutzen | 1 |
| Rohr | 3 |
| Rohraufnahmeabschnitt | 4 |
| Wandung | 5 |
| Sollbruchstelle | 6 |
| Rohrkontaktelement | 7 |
| Innenwand des Rohraufhahmeabschnitts | 8 |
| Rohrkontaktfläche | 9 |
| Endbereich des Rohrkontaktelements | 10 |

## Patentansprüche

1. Rohrstutzen eines Elektroinstallationsgehäuses, zur Aufnahme eines Endes eines Rohres (3), mit einem Rohraufnahmeabschnitt (4) der auf seiner zur Einführung des Rohres (3) vorgesehenen Seite offen und auf seiner anderen Seite mit einer Wandung (5) verschlossen ist, wobei die Wandung (5) eine Sollbruchstelle (6) aufweist, so dass ein Bereich der Wandung (5) herausbrechbar ist, und auf dem herausbrechbaren Bereich der Wandung (5) ein Rohrkontaktelement (7) befestigt ist, das derart ausgestaltet ist, dass das Rohrkontaktelement (7) von der Wandung (5) in das Innere des Rohraufnahmeabschnitts (4) hineinreicht und eine der Innenwand (8) des Rohraufnahmeabschnitts (4) zugewandte Rohrkontaktfläche (9) aufweist, **dadurch gekennzeichnet, dass** die Rohrkontaktfläche (9) mit zunehmendem Abstand von der Wandung (5) weiter von der Innenwand (8) des Rohraufnahmeabschnitts (4) entfernt ist, so dass es beim Einführen eines Rohres (3) in den Rohraufnahmeabschnitt (4) zur Übertragung eines Momentes auf den herausbrechbaren Bereich der Wandung (5) kommt, so dass mit fortschreitendem Einführen des Rohres (3) in den Rohraufnahmeabschnitt (4) und damit beim Aufschieben des Rohres (3) auf das Rohrkontaktelement (7) das Rohrkontaktelement (7) immer stärker werdende seitliche Kräfte erfährt und der herausbrechbare Bereich der Wandung (5) herausgebrochen und schließlich aus dem Rohrstutzen ausgeworfen wird.

2. Rohrstutzen nach Anspruch 1, **dadurch gekennzeichnet, dass** die Rohrkontaktfläche (9) mit der Innenwand (8) des Rohraufhahmeabschnitts (4) einen Winkel α von 30° oder weniger einschließt.

3. Rohrstutzen nach Anspruch 1 oder 2, **dadurch gekennzeichnet, dass** die Rohrkontaktfläche (9) abschnittweise in verschiedenen Winkeln gegenüber der Innenwand (8) verläuft.

4. Rohrstutzen nach einem der vorherigen Ansprüche, **dadurch gekennzeichnet, dass** die Rohrkontaktfläche (9) wenigstens abschnittweise gekrümmt verläuft.

5. Rohrstutzen nach einem der vorherigen Ansprüche, **dadurch gekennzeichnet, dass** das Rohrkontaktelement (7) in seinem Endbereich (10), bevor das Rohrkontaktelement (7) an dem herausbrechbaren Bereich der Wandung (5) befestigt ist, eine Außenfläche aufweist, die mit der Innenwand (8) des Rohraufnahmeabschnitts (4) einen Winkel einschließt, der größer als der Winkel ist, den die Rohrkontaktfläche (9) mit der Innenwand (8) einschließt.

6. Rohrstutzen nach Anspruch 5, **dadurch gekennzeichnet, dass** der Endbereich (10) des Rohrkontaktelements (7), bevor das Rohrkontaktelement (7) an dem herausbrechbaren Bereich der Wandung (5) befestigt ist, in Längsrichtung des Rohrstutzens gesehen eine Länge von wenigstens 1 mm und eine maximale Länge von 20 mm aufweist.

7. Rohrstutzen nach einem der vorherigen Ansprüche, **dadurch gekennzeichnet, dass** die Sollbruchstelle (6) um das Rohrkontaktelement (7) herum verläuft und einen der Rohrkontaktfläche (9) abgewandten Bereich aufweist, der wenigstens abschnittsweise, vorzugsweise vollständig, längs einer Geraden verläuft.

8. Rohrstutzen nach einem der vorherigen Ansprüche, **dadurch gekennzeichnet, dass** ein zweites, auf einem herausbrechbaren Bereich der Wandung (5) befestigtes Rohrkontaktelement (7) vorgesehen ist, das von der Wandung (5) in das Innere des Rohraufnahmeabschnitts (4) hineinreicht und eine der Innenwand (8) des Rohraufnahmeabschnitts (4) zugewandte Rohrkontaktfläche (9) aufweist, die mit zunehmendem Abstand von der Wandung (5) weiter von der Innenwand (8) des Rohraufnahmeabschnitts (4) entfernt ist und mit der Innenwand (8) des Rohraufnahmeabschnitts einen Winkel α von maximal 30° einschließt.

9. Rohrstutzen nach Anspruch 8, **dadurch gekennzeichnet, dass** das zweite Rohrkontaktelement (7) auf einem separaten herausbrechbaren Bereich der Wandung (5) angeordnet ist.

10. Rohrstutzen nach Anspruch 9, **dadurch gekennzeichnet, dass** der separate herausbrechbare Bereich der Wandung (5) direkt an den anderen herausbrechbaren Bereich der Wandung (5) angrenzt und vorzugsweise die Grenze, an der die beiden herausbrechbaren Bereiche der Wandung (5) aneinander angrenzen, längs einer Geraden verläuft.

11. Rohrstutzen nach einem der Ansprüche 8 bis 10, **dadurch gekennzeichnet, dass** die beiden Rohrkontaktelemente (7) relativ zu der Längsachse des Rohrstutzens achssymmetrisch ausgestaltet und angeordnet sind.

12. Satz mit einem Rohrstutzen (1) eines Elektroinstallationsgehäuses nach einem der vorherigen Ansprüche und einem mit einem seiner Enden in den Rohrstutzen (1) einführbaren Rohr (3).

13. Satz mit einem Rohrstutzen (1) eines Elektroinstallationsgehäuses und einem mit einem seiner Enden in den Rohrstutzen (1) einführbaren Rohr (3) nach Anspruch 12, **dadurch gekennzeichnet, dass** ein zweites, auf einem herausbrechbaren Bereich der Wandung (5) befestigtes Rohrkontaktelement (7) vorgesehen ist, das von der Wandung (5) in das Innere des Rohraufhahmeabschnitts (4) hineinreicht und eine der Innenwand (8) des Rohraufnahmeabschnitts (4) zugewandte Rohrkontaktfläche (9) aufweist, die mit zunehmendem Abstand von der Wandung (5) weiter von der Innenwand (8) des Rohraufnahmeabschnitts (4) entfernt ist wobei die Sollbruchstelle (6) und die Rohrkontaktfläche (9) derart dimensioniert sind, dass beim Einführen des Rohres (3) in den Rohraufnahmeabschnitt (4) des Rohrstutzens (1) derart, dass das Ende des Rohres (3) in einem vorbestimmten Abstand vor der Wandung (4) steht, von der Innenwand des Rohres (3) ein derartiges Moment auf die Rohrkontaktfläche (7) ausgeübt wird, dass der herausbrechbare Bereich der Wandung (5) herausgebrochen wird, wobei der Abstand der Rohrkontaktflächen (9) der beiden Rohrkontaktelemente (7) im Endbereich (10) des Rohrkontaktelements (7), bevor das Rohrkontaktelement (7) an dem herausbrechbaren Bereich der Wandung (5) befestigt ist, größer als der Innendurchmesser des Rohres (3) ist.

## Claims

1. A pipe socket of an electrical installation housing, for receiving one end of a pipe (3), comprising a pipe receiving section (4), which is open on the side thereof provided for the insertion of the pipe (3) and is closed on the other side thereof by a wall (5), the wall (5) including a predetermined breaking point (6) so that a region of the wall (5) can be broken out, and a pipe contact element (7) being attached on the region of the wall (5) that can be broken out, which is designed in such a way that the pipe contact element (7) extends from the wall (5) into the interior of the pipe receiving section (4) and includes a pipe contact surface (9) facing the inner wall (8) of the pipe receiving section (4), **characterized in that**, with increasing distance from the wall (5), the pipe contact surface (9) is located further away from the inner wall (8) of the pipe receiving section (4), so that a moment is transferred to the region of the wall (5) that can be broken out when a pipe (3) is inserted into the pipe receiving section (4), so that, as the pipe (3) is progressively inserted into the pipe receiving section (4) and the pipe (3) is pushed onto the pipe contact element (7), the pipe contact element (7) experiences increasingly higher lateral forces, and the region of the wall (5) that can be broken out is broken out and ultimately ejected from the pipe socket.

2. The pipe socket according to claim 1, **characterized in that** the pipe contact surface (9) forms an angle α of 30° or less with the inner wall (8) of the pipe receiving section (4).

3. The pipe socket according to claim 1 or 2, **characterized in that** the pipe contact surface (9), in some sections, extends at different angles with respect to the inner wall (8).

4. The pipe socket according to any one of the preceding claims, **characterized in that** the pipe contact surface (9), at least in some sections, extends in a curved manner.

5. The pipe socket according to any one of the preceding claims, **characterized in that** the pipe contact element (7) in the end region thereof (10), before the pipe contact element (7) is attached on the region of the wall (5) that can be broken out, includes an outer surface that, with the inner wall (8) of the pipe receiving section (4), forms an angle greater than the angle that the pipe contact surface (9) forms with the inner wall (8).

6. The pipe socket according to claim 5, **characterized in that** the end region (10) of the pipe contact element (7), before the pipe contact element (7) is attached on the region of the wall (5) that can be broken out, has a length of at least 1 mm, and a maximum length of 20 mm, seen in the longitudinal direction of the pipe socket.

7. The pipe socket according to any one of the preceding claims, **characterized in that** the predetermined breaking point (6) extends around the pipe contact element (7) and includes a region, facing away from the pipe contact surface (9), that, at least in some sections, and preferably completely, extends along a straight line.

8. The pipe socket according to any one of the preceding claims, **characterized in that** a second pipe contact element (7), which is attached on a region of the wall (5) that can be broken out, is provided, which extends from the wall (5) into the interior of the pipe receiving section (4) and includes a pipe contact surface (9), facing the inner wall (8) of the pipe receiving section (4), that, with increasing distance from the wall (5), is located further away from the inner wall (8) of the pipe receiving section (4), and forms an angle α of no more than 30° with the inner wall (8) of the pipe receiving section.

9. The pipe socket according to claim 8, **characterized in that** the second pipe contact element (7) is arranged on a separate region of the wall (5) that can be broken out.

10. The pipe socket according to claim 9, **characterized in that** the separate region of the wall (5) that can be broken out directly abuts the other region of the wall (5) that can be broken out, and preferably the boundary on which the two regions of the wall (5) that can be broken out abut extends along a straight line.

11. The pipe socket according to any one of claims 8 to 10, **characterized in that** the two pipe contact elements (7) are designed and arranged axially symmetrically relative to the longitudinal axis of the pipe socket.

12. A kit comprising a pipe socket (1) of an electrical installation housing according to any one of the preceding claims and a pipe (3) that can be inserted with one of the two ends thereof into the pipe socket (1).

13. The kit comprising a pipe socket (1) of an electrical installation housing and a pipe (3) that can be inserted with one of the two ends thereof into the pipe socket (1) according to claim 12, **characterized in that** a second pipe contact element (7), which is attached on a region of the wall (5) that can be broken out, is provided, which extends from the wall (5) into the interior of the pipe receiving section (4) and includes a pipe contact surface (9), facing the inner wall (8) of the pipe receiving section (4), that, with increasing distance from the wall (5), is located further away from the inner wall (8) of the pipe receiving section (4), the predetermined breaking point (6) and the pipe contact surface (9) being dimensioned in such a way that, during the insertion of the pipe (3) into the pipe receiving section (4) of the pipe socket (1) such that the end of the pipe (3) is located at a predetermined distance in front of the wall (4), such a moment is exerted by the inner wall of the pipe (3) on the pipe contact surface (7) that the region of the wall (5) that can be broken out is broken out, the distance between the pipe contact surfaces (9) of the two pipe contact elements (7) in the end region (10) of the pipe contact element (7), before the pipe contact element (7) is attached on the region of the wall (5) that can be broken out, being greater than the inside diameter of the pipe (3).

## Revendications

1. Raccord de tuyau d'un boîtier d'installation électrique, permettant l'admission d'une extrémité d'un tuyau (3), avec un segment de réception de tuyau (4) qui est ouvert sur son côté prévu pour l'insertion du tuyau et est fermé sur son autre côté avec une paroi (5), où la paroi (5) présente un point de rupture souhaitée (6) de sorte qu'une région de la paroi (5) peut être éclatée, et un élément de contact de tuyau (7) est fixé sur la région de la paroi (5) pouvant être éclatée et qui est conçu de manière à ce que l'élément de contact de tuyau (7) va jusqu'à l'intérieur du segment de réception de tuyau (4) en partant de la paroi (5) et présente une surface de contact de tuyau (9) orientée vers la paroi intérieure (8) du segment de réception de tuyau (4), **caractérisé en ce que** la surface de contact de tuyau (9) est éloignée avec une distance croissante de la paroi (5) de plus en plus importante de la paroi intérieure (8) du segment de contact de tuyau (4), de sorte que, lors de l'insertion d'un tuyau (3) dans le segment de réception de tuyau (4), il se produit la transmission d'un couple sur la région de la paroi (5) pouvant être éclatée, de sorte qu'avec la progression de l'insertion du tuyau (3) dans le segment de réception de tuyau (4), et par conséquent, lors du coulissement du tuyau (3) sur l'élément de contact de tuyau (7), l'élément de contact de tuyau (7) rencontre des forces latérales devenant de plus en plus importantes et la région de la paroi pouvant être éclatée est éclatée et finalement éjectée du raccord de tuyau.

2. Raccord de tuyau selon la revendication 1, **caractérisé en ce que** la surface de contact de tuyau (9) fait un angle α de 30 ° ou moins avec la paroi intérieure (8) du segment de réception du tuyau (4).

3. Raccord de tuyau selon la revendication 1 ou la revendication 2, **caractérisé en ce que** la surface de contact de tuyau (9), par endroits, s'étend avec divers angles par rapport à la paroi intérieure (8).

4. Raccord de tuyau selon l'une des revendications précédentes, **caractérisé en ce que** la surface de contact de tuyau (9) s'étend de manière courbe au moins par endroits.

5. Raccord de tuyau selon l'une des revendications précédentes, **caractérisé en ce que** l'élément de contact de tuyau (7) présente une surface extérieure, qui fait un angle avec la paroi intérieure (8) du segment de réception de tuyau (4) qui est supérieur à l'angle que fait la surface de contact de tuyau (9) avec la paroi intérieure (8), au niveau de sa zone d'extrémité (10) avant que l'élément de contact de tuyau (7) ne soit fixé sur la région de la paroi (5) pouvant être éclatée.

6. Raccord de tuyau selon la revendication 5, **caractérisé en ce que** la zone d'extrémité (10) de l'élément de contact de tuyau (7), avant que l'élément de contact de tuyau (7) ne soit fixé sur la zone de la paroi (5) pouvant être éclatée, présente une longueur d'au moins 1 mm et une longueur maximale de 20 mm, vu dans la direction du raccord de tuyau.

7. Raccord de tuyau selon l'une des revendications précédentes, **caractérisé en ce que** le point de rupture souhaitée (6) s'étend autour de l'élément de contact de tuyau (7) et présente une région orientée à l'opposé de la surface de contact de tuyau (9) qui s'étend, au moins par endroits, de préférence, totalement le long d'une droite.

8. Raccord de tuyau selon l'une des revendications précédentes, **caractérisé en ce qu'**un deuxième élément de contact de tuyau (7 est prévu fixé sur une région de la paroi (5) pouvant être éclatée, qui s'étend à partir de la paroi (5) vers l'intérieur du segment de réception de tuyau (4) et présente une surface de contact de tuyau (9), orientée vers la paroi intérieure (8) du segment de réception de tuyau (4), qui est de plus en plus éloignée de la paroi (5) de la paroi intérieure (8) du segment de réception du tuyau (4) et fait un angle α d'au maximum 30 ° avec la paroi intérieure (8) du segment de réception du tuyau.

9. Raccord de tuyau selon la revendication 8, **caractérisé en ce que** le deuxième élément de contact de tuyau (7) est disposé sur une région de la paroi (5) pouvant être éclatée séparée.

10. Raccord de tuyau selon la revendication 9, **caractérisé en ce que** la région de la paroi (5) pouvant être éclatée séparée est directement limitrophe de l'autre région de la paroi (5) pouvant être éclatée et de préférence la limite où les deux régions de la paroi (5) pouvant être éclatées sont limitrophes l'une de l'autre s'étend le long d'une droite.

11. Raccord de tuyau selon l'une des revendications 8 à 10, **caractérisé en ce que** les deux éléments de contact de tuyau (7) sont conçus et disposés de manière symétrique par rapport à l'axe longitudinal du raccord de tuyau.

12. Ensemble avec un raccord de tuyau (1) d'un boîtier d'installation électrique selon l'une des revendications précédentes et un tuyau (3) pouvant être inséré dans le raccord de tuyau (1) avec ses extrémités.

13. Ensemble avec un raccord de tuyau (1) d'un boîtier d'installation électrique et un tuyau (3) pouvant être inséré dans le raccord de tuyau (1) avec ses extrémités selon la revendication 12, **caractérisé en ce qu'**un deuxième élément de contact de tuyau (7), fixé sur une région pouvant être éclatée de la paroi (5), est prévu, qui va jusqu'à l'intérieur du segment de réception de tuyau (4) à partir de la paroi (5) et présente une surface de contact de tuyau (9) orientée vers la paroi intérieure (8) du segment de réception de tuyau (4) qui est éloignée avec une distance croissante de la paroi (5) de la paroi intérieure (8) du segment de réception de tuyau (4), où le point de rupture souhaitée (6) et la surface de contact de tuyau (9) sont dimensionnés de sorte que, lors de l'insertion du tuyau (3) dans le segment de réception de tuyau (4) du raccord de tuyau (1), l'extrémité du tuyau (3) est à une distance prédéfinie de la paroi (4), de telle sorte qu'un couple est exercé sur la surface de contact de tuyau (7) à partir de la paroi intérieure du tuyau (3) que la région pouvant éclater de la paroi (5) est éclatée, où la distance des surfaces de contact de tuyau (9) des deux éléments de contact de tuyau (7) est supérieure au diamètre intérieur du tuyau (3) dans la zone d'extrémité (10) de l'élément de contact de tuyau (7) avant que l'élément de contact de tuyau (7) ne soit fixé sur la région pouvant éclater de la paroi (5).
